# EUROPEAN PATENT SPECIFICATION

(11) **EP 1 601 708 B1**
(45) Date of publication and mention of the grant of the patent: **27.12.2006**
(21) Application number: 04713550.4
(22) Date of filing: 23.02.2004
(51) Int. Cl.: C08G 65/00

(54) **PROCESS FOR PREPARATION OF POLYETHER POLYOLS**
VERFAHREN ZUR HERSTELLUNG VON POLYETHERPOLYOLEN
PROCEDE DE PREPARATION DE POLYETHER POLYOLS

(30) Priority: 26.02.2003 SG 200300802
(43) Date of publication of application: 07.12.2005
(73) Proprietor: SHELL INTERNATIONALE RESEARCH MAATSCHAPPIJ B.V., 2596 HR Den Haag (NL)
(72) Inventor: BECKERS, Johannes, Gerhardus, Joseph, NL-1031 CM Amsterdam (NL); DU CAUZE DE NAZELLE, Gerard, Singapore 627879 (SG); INGENBLEEK, Gerardus, Wilhelmus, Henricus, NL-1031 CM Amsterdam (NL); SANGHA, Parminder, Singh, NL-1031 CM Amsterdam (NL)
(86) International application number: PCT/EP2004/050186
(87) International publication number: WO 2004/076528

(56) References cited:
- EP-A- 0 047 371
- EP-A- 0 623 637
- WO-A-01/88015

## Description

The present invention relates to a process for the preparation of polyether polyols.

Alkylene oxides such as ethylene oxide, propylene oxide or butylene oxide are used in a great number of processes as raw materials. Among these, the manufacture of polyoxyalkylene polyether polyols, often referred to as polyether polyols, is a major commercial application.

The main processes for the manufacture of alkylene oxides are based on the epoxidation of alkenes. Ethylene oxide is generally prepared by epoxidation of ethene with oxygen, catalysed by a silver catalyst. Propylene oxide is usually produced by epoxidation of propene with a hydroperoxide, such as tertiary butyl hydroperoxide, ethyl benzene hydroperoxide and hydrogen peroxide. Besides alkylene oxide a number of by-products are formed. The alkylene oxide separated from the reaction mixture by one or more distillations is called crude alkylene oxide. Such crude alkylene oxide comprises minor quantities of one or more impurities such as aldehydes, ketones, acids, esters, alcohols, hydrocarbons and water.

Even these relatively small amounts of impurities can interfere in alkoxylation processes. Therefore, crude alkylene oxides are generally subjected to extensive further purification. Usually, an alkylene oxide content of more than 99.85% by weight is considered as satisfying for the manufacture of alkylene oxide derivates.

However, alkylene oxides of such purity level are cumbersome to manufacture. More particularly, separating off impurities having a boiling point close to the alkylene oxides, such as aldehydes, ketones, alcohols, organic acids and water has been found to cause problems. Purification processes have been described in US-A-3,881,996 , US-A-5,352,807, and US-A-3,574,772 and US-A-6,024,840.

WO 01/88015 A describes a process for the preparation of polyether polyols. No information is given on the purity of the alkylene oxide used in such process. An impurity mentioned, i.e. water in an amount of 2 % by weight or less, is an impurity in the polyether polyol, introduced in the neutralising step after the preparation process for the polyether polyols has been finalized. EP 0 623 637 A describes a process for the preparation of polyether polyols by polymerizing a reaction mixture containing propylene oxide, an initiator and an epoxide polymerization catalyst. The propylene oxide source can be any source of pure propylene oxide, mixed epoxides, separate feeds of propylene oxide and other epoxides, and streams of recycled epoxides from the process. In the process of EP 0 623 637 A, allyl alcohol and lower allyl alcohol propoxylates are removed from the polymerizing reaction mixture. No information is given on the purity of the alkylene oxide used in such process. Impurities which are mentioned, i.e. the allyl alcohols and lower allyl alcohol propoxylates, are impurities in the resulting polyether polyol, i.e. side-products generated during the preparation process and not impurities in the alkylene oxide.

EP 0 047 371 A describes a process for the preparation of polyether polyols, wherein the amount of catalyst is increased during the polymerization. No information is given on the purity of the alkylene oxide used in such process. The impurity which is mentioned is an impurity in the resulting polyether polyol, i.e. allyl alcohol, a possible side-product generated during the preparation process and not an impurity in the alkylene oxide.

It would be highly desirable to be able to use crude alkylene oxide instead of pure alkylene oxide.

Surprisingly, it was found that the present invention makes it possible to prepare polyether polyols partly from crude alkylene oxide. These polyether polyols were observed to have the same or similar properties and performance to those prepared from pure alkylene oxides.

Accordingly, the present invention relates to a process for the preparation of polyether polyols having an average molecular weight of at least 2000, comprising
(i) reacting an initiator with a crude alkylene oxide, which crude alkylene oxide comprises on total composition from 95.00% by weight to 99.85% by weight of an alkylene oxide, and of from 5.0% by weight to 0.15% by weight of compounds other than alkylene oxide, wherein said compounds other than alkylene oxide may be hydrocarbons such as alkenes and alkanes, and oxygen containing by-products such as aldehydes, ketones, alcohols, ethers, acids and esters, such as water, acetone, acetic aldehyde, propionic aldehyde, methyl formate, and the corresponding carbon acids, in the presence of a catalyst to obtain an intermediate product having a weight average molecular weight of from 200 to 1100;
(ii) reacting the intermediate product further with one or more pure alkylene oxides, which pure alkylene oxide comprises on total composition at least 99.85% by weight of alkylene oxide, to yield the polyether polyols.

In the present invention, the molecular weights mentioned are weight average molecular weights.

Initiator compounds useful in step (i) are compounds having a plurality of active hydrogen atoms. Such active hydrogen atoms are typically present in the form of hydroxyl groups, but may also be present in the form of e.g. amine groups. Suitable initiator compounds include alcohols containing at least two active hydrogen atoms per molecule available for reaction with the crude alkylene oxides. Suitable aliphatic initiator compounds include polyhydric alcohols containing of from 2 to 6 hydroxyl groups per molecule. Suitable aromatic compounds include aromatic alcohols containing at least two active hydrogen atoms per molecule available for reaction with the crude alkylene oxides. Examples of such alcohols are diethylene glycol, dipropylene glycol, glycerol, di- and polyglycerols, pentaerythritol, trimethylolpropane, triethanolamine, sorbitol, mannitol, 2,2'-bis(4-hydroxylphenyl)propane (bisphenol A), 2,2'-bis(4-hydroxylphenyl)butane (bisphenol B) and 2,2'-bis(4-hydroxylphenyl)methane (bisphenol F). Preferred are aliphatic alcohols containing at least 2, more preferably at least 3 active hydrogen groups in the form of hydroxyl groups. Preferably, the aliphatic alcohols contain at most 5, more preferably at most 4, and most preferably at most 3 hydroxyl groups per molecule. Most preferred are glycols, such as glycerol.

In step (i) of the present process, crude alkylene oxide is used. The crude alkylene oxide comprises on total composition from 95.00% by weight to 99.85% by weight of an alkylene oxide, and of from 5.0% by weight to 0.15% by weight of compounds other than alkylene oxide. Preferably, the alkylene oxide is selected from the group consisting of ethylene oxide, propylene oxide or butylene oxide. The crude alkylene oxide preferably comprises at least 96.00% by weight of alkylene oxide, more preferably more than 96.00% by weight, even more preferably at least 97.00% by weight, more preferably more than 97.00% by weight, even more preferably at least 99.00% by weight, again more preferably more than 99.00% by weight, most preferably at least 99.50% by weight of alkylene oxide. The crude alkylene oxide comprises at most 99.85% by weight of alkylene oxide, more preferably at most 99.80% by weight, more preferably less than 99.80% by weight, again more preferably at most 99.75% by weight, more preferably less than 99.75% by weight, and most preferably at most 99.70% by weight of alkylene oxide.

The crude alkylene oxide may contain hydrocarbons such as alkenes and alkanes, and oxygen containing by-products such as aldehydes, ketones, alcohols, ethers, acids and esters, such as water, acetone, acetic aldehyde, propionic aldehyde, methyl formate, and the corresponding carbon acids. The crude alkylene oxide may also comprise a small quantity of poly(alkylene oxide) having a weight average molecular weight of more than 2000, preferably less than 50 ppm by weight. The crude alkylene oxide preferably contains at most 30 ppm, more preferably at most 20 ppm, even more preferably at most 15 ppm, and most preferably contains at most 12 ppm of poly(alkylene oxide)having a weight average molecular weight of more than 2000.

Preferably, the crude alkylene oxide used in step (i) is obtained by
(a) reacting alkenes with peroxide-containing compounds to yield alkylene oxides, and
(b) removing unreacted alkene from the reaction mixture, and
(c) removing crude alkylene oxide from the reaction mixture by at least one distillation treatment, and optionally
(d) removing contaminants from the crude alkylene oxide by at least one distillation treatment.

In step (a), an alkene feed is reacted with a peroxide-containing compound in such way, that the alkene is epoxidized. The reaction mixture may comprise unreacted alkenes, peroxide-containing compounds, reaction product, by-products and, optionally, solvents.

Unreacted alkene is removed from the reaction mixture in step (b) for example by a distillation. The distillation treatment can be carried out at a pressure of from 1 to 20 * 10⁵ N/m², and at a temperature range of from 10 °C to 250 °C. The distillation can remove the unreacted alkenes along with other low boiling impurities can be removed from the crude alkylene oxide.

In step (c), the crude alkylene oxide is removed together with lower boiling contaminants as an overhead product from the reaction mixture. The distillation treatment can be carried out at a pressure of from 0.1 to 20 * 10⁵ N/m², and at a temperature range of from 0 °C to 250 °C. Preferably, the distillation treatment is carried out at a pressure in the range of from 0.1 to 1* 10⁵ N/m², and at a temperature in the range of from 10 °C to 200 °C.

In step (d), contaminants having a lower boiling point than the alkylene oxide may optionally be removed as overhead product by one or more distillation steps from the crude alkylene oxide. In one or more of the distillation treatments of step (d), one or more entrailer components may be added to the crude alkylene oxide. Entrailer components tend to reduce the amount of components other than alkylene oxide in the bottom product of the distillation unit, in particular water. Preferred entrailers are aliphatic hydrocarbons having 4 or 5 carbon atoms. Such distillation treatment can be carried out at a pressure of from 1 to 20 * 10⁵ N/m², and at a temperature range of from 0 °C to 200 °C. Preferably, the distillation treatment is carried out at a pressure in the range of from 5 to 10* 10⁵ N/m², and at a temperature in the range of from 10 °C to 150 °C. It is within the normal skills of a person skilled in the art to derive suitable conditions for these treatments without undue experimentation.

Whereas the separation of the unreacted alkenes from the reaction mixture can be effected without difficulty, the separation of hydrocarbons, aldehydes and acids from the alkylene oxide is particularly difficult, even by fractioned distillation. Generally, distillation units used for step (c) and optionally (d) do not have a high enough resolution to separate the alkylene oxides from close boiling contaminants.

A subsequent purification is required in order to further purify the crude alkylene oxide obtained from steps (c) and optionally (d) to obtain pure alkylene oxide. Pure alkylene oxide is generally prepared from crude alkylene oxide by submitting the crude alkylene oxide obtained from step (c) and optionally (d) to an additional purification treatment(e). Such purification treatment (e) can include one or more fractioned and/or extractive distillations of the crude alkylene oxide, whereby the alkylene oxide is separated as overhead product from contaminants having a higher boiling point, as described for instance in US-A-3,881,996 and US-A 6,024,840. Other suitable purification treatments include filtration and adsorption treatments with suitable adsorbents as described in US-A-5,352,807. A preferred treatment (e) is extractive distillation under addition of heavier hydrocarbons, such as ethyl benzene or octane, whereby the alkylene oxide is separated as overhead product.

Pure alkylene oxide obtained from step (e), as for instance used in step (ii) of the process according to the present invention, is considered to comprise on total composition at least 99.85% by weight of alkylene oxide. Preferably, pure alkylene oxide comprises at least 99.90% by weight, more preferably at least 99.95% by weight of alkylene oxide, again more preferably at least 99.97% by weight of alkylene oxide, and most preferably at least 99.98% by weight of alkylene oxide. Such pure alkylene oxide is generally considered to be essentially anhydrous, and preferably contains esters, aldehydes and ketones in concentrations of less than 100 ppm, preferably less than 50 ppm, most preferably less than 30 ppm.

Preferably, the pure alkylene oxide is obtained by
(a) reacting alkenes with peroxide-containing compounds to yield alkylene oxides, and
(b) removing unreacted alkene from the reaction mixture, and
(c) removing crude alkylene oxide from the reaction mixture by at least one distillation treatment, and optionally
(d) removing contaminants from the crude alkylene oxide by at least one distillation treatment, and
(e) fractioned distillation, extractive distillation, adsorption and/or filtration.

Suitable alkylene oxides for step (i) are alkylene oxides known to be useful in the preparation of polyether polyols. Such alkylene oxides comprise advantageously aliphatic compounds comprising of from 2 to 8 carbon atoms, preferably comprising of from 2 to 6 carbon atoms, and most preferably comprising of from 2 to 4 carbon atoms.

Preferably, the crude alkylene product stream contains an alkylene oxide selected from the group consisting of ethylene oxide, propylene oxide and butylene oxide, and mixtures of two or more of these compounds. More preferred alkylene oxides are ethylene oxide and propylene oxide, and most preferred is propylene oxide.

In step (i) of the present process, any suitable catalyst may be used. Suitable catalysts include inorganic or organic basic compounds such as alkali and alkaline earth hydroxides, carbonates, bicarbonates and the like, tertiary amines and derivatives thereof, having aliphatic, aromatic or heterocyclic structures, and as monomers or bound to any suitable inorganic or organic polymeric support. Examples of such catalysts are sodium hydroxide, sodium bicarbonate, potassium hydroxide, potassium bicarbonate, ammonium hydroxide, sodium bicarbonate, barium hydroxide, caesium hydroxide, n-methylmorpholine, and the like. Other suitable catalysts include metal complexes, such as for instance double metal cyanide catalysts (DMC).

In a preferred aspect of the present invention, the catalyst is an alkali metal or earth alkaline salt, more preferably sodium or potassium hydroxide, most preferably potassium hydroxide.

The amount of the catalyst to be used depends largely on the functionality of the initiator, the type of catalyst used, the desired functionality and the desired molecular weight of the product of step (i).

Generally, of from 10 ppm to 15% by weight of catalyst is used calculated on the weight of initiator used. When the catalyst is an alkali metal or earth alkaline salt, it is preferably used in an amount in the range of from 0.01 to 15% by weight. When a double metal cyanide catalyst is used, the amounts preferably are in the range of from 10 ppm to 2000 ppm. It lies within the normal skills of a person skilled in the art to define the required quantities.

Step (i) may be carried out at any suitable temperature, for example in a range of from 60 to 180 °C, preferably at a temperature of at least 80 °C, more preferably at least 95 °C, and most preferably at least 100 °C. The temperature of step (i) preferably is at most 150 °C, more preferably at most 140 °C, and most preferably at most 135 °C. After step (i), a reduced pressure and/or a nitrogen purge may be applied to the reaction vessel to remove water.

In a preferred embodiment of the present process, the intermediate product obtained in step (i) is purified prior to step (ii).

The intermediate product obtainable from step (i) has a molecular weight in the range of from 200 to 1100.

In a preferred aspect of this invention, the intermediate product of step (i) has an average molecular weight of at least 210, more preferably of at least 270, and most preferably of at least 320. The average molecular weight of the intermediate product preferably is at most 950, more preferably at most 900, and most preferably at most 850. Conveniently, the intermediate product may have a hydroxyl value in the range of from 100 to 900. Preferably, the intermediate product has a hydroxyl value of at least 110 mg KOH/g, more preferably of at least 140 mg KOH/g, and most preferably of at least 150 mg KOH/g. The intermediate product further preferably has a hydroxyl value of at most 890 mg KOH/g, more preferably of at most 870 mg KOH/g, and most preferably of at most 840 mg KOH/g.

After step (i), the intermediate product obtained in step (i) is preferably neutralised and/or filtered prior to use in step (ii). The product of step (i) may be subjected to a neutralisation treatment by addition of a suitable acid, for instance phosphoric acid. Salts and/or other solid matter may be removed from the intermediate product by any means available to a skilled person, such as filtration through a filter or centrifugation filtration.

The intermediate product of step (i) may be removed from the reaction vessel to continue the reaction in a different reaction vessel, or may be left in the reaction vessel to directly subject to step (ii).

The intermediate product can be stored prior to use in step (ii). The present invention also relates to the intermediate product obtainable by step (i) of the process according to the present invention. These intermediate products differ from the known intermediates in that they comprise the reaction products of those impurities that react with the alkylene oxides in step (i) of the present process.

In step (ii), the intermediate product obtained in step (i) is reacted with pure alkylene oxides selected from the group comprising ethylene oxide, propylene oxide and butylene oxide, and mixtures of two or more of these compounds. The pure alkylene oxides used in step (ii) advantageously had been subjected to further purification. The pure alkylene oxides have purity of at least 99.85% by weight, preferably at least 99.95% by weight and most preferably at least 99.99% by weight.

Preferably, the alkylene oxides for use in (ii) are selected from the group consisting of ethylene oxide, propylene oxide and butylene oxide, and mixtures of two or more of these compounds. More preferably, the alkylene oxides are selected from ethylene oxide and propylene oxide, and mixtures thereof. The reaction may be performed by addition of mixtures of the alkylene oxides, leading to random distribution of the products in the polyalkylene polyether chains, or by subsequent addition, leading to block polymer structures. Preferably, the polyols further are block polymers of propylene oxide optionally containing additional ethylene oxide, and optionally tipped with ethylene oxide. If additional ethylene oxide is present, the polymer can be a block polymer or a random polymer.

The catalyst present in the product of step (i) can also catalyse the reaction in step (ii) without the need for additional catalyst. Optionally, a catalyst selected from the group consisting of alkali metal or alkaline earth salts, and double metal cyanide catalysts (DMC) may be added to the mixture obtained in step (i). As a preferred alkoxylation catalyst in step (ii), alkali metal or alkaline earth hydroxides can be used. More preferably sodium or potassium or caesium hydroxides are used, even more preferably sodium or potassium hydroxide, and most preferably potassium hydroxide.

Other catalysts that are suitable for use in step (ii) are double metal cyanide catalysts. A process, by which such a DMC catalyst can be prepared, has been described in PCT patent application WO-A-01/72418. The process described comprises the steps of:
(1) combining an aqueous solution of a metal salt with an aqueous solution of a metal cyanide salt and reacting these solutions, wherein at least part of this reaction takes place in the presence of an organic complexing agent, thereby forming a dispersion of a solid DMC complex in an aqueous medium;
(2) combining the dispersion obtained in step (1) with a liquid, which is essentially insoluble in water and which is capable of extracting the solid DMC complex formed in step (1) from the aqueous medium, and allowing a two-phase system to be formed consisting of a first aqueous layer and a layer containing the DMC complex and the liquid added;
(3) removing the first aqueous layer; and
(4) recovering the DMC catalyst from the layer containing the DMC catalyst.

These DMC catalysts are very active and hence exhibit high polymerisation rates. They are sufficiently active to allow their use at very low concentrations, such as 40 ppm or less. At such low concentrations, the catalyst can often be left in the polyether products without an adverse effect on product quality. The ability to leave catalysts in the polyol is an important advantage because commercial polyols currently require a catalyst removal step.

The reaction of alkylene oxides is suitably carried out by reacting starter compounds such as the intermediate products obtained from step (i) of the present invention with DMC catalyst at a temperature of from 80 to 150 °C, more particularly from 90 to 130 °C at atmospheric pressure. Higher pressures may also be applied, but the pressure will usually not exceed 20 *10⁵ N/m² and preferably is from 1 to 5 *10⁵ N/m². These conditions are suitable for step (ii) of the present invention.

Conveniently, the polyether polyols obtained from step (ii) will have a hydroxyl content of from 20 to 350 mg KOH/g polyol and a nominal functionality of from 1.5 to 8. The polyols preferably have a nominal functionality in the range of from 2 to 6, more preferably 2.5 to 5.9 and most preferably of from 2.5 to 5.8.

The polyether polyols obtained from step (ii) will further have an average molecular weight in the range of from 2000 to 8500. The polyols preferably have an average molecular weight of at least 2100, more preferably at least 2400, and most preferably, of at least 2500. The polyols preferably have a molecular weigh of at most of 7500, and more preferably of at most 7000, and most preferably of at most 6500.

Conveniently, the polyol prepared according to the present invention will have a hydroxyl content of from 10 to 400 mg KOH/g polyol. Preferably, the polyol will have a hydroxyl content of from 15 to 380 mg KOH/g polyol, and most preferably a hydroxyl content of from 20 to 350 mg KOH/g polyol.

The process according to the present invention is further elucidated by reference to the following examples, which are provided for illustrative purposes and to which the invention is not limited.

In the example section, the methods employed for measurements were as follows: Viscosity was measured according to ASTM method D445. Molecular weights were determined using a GPC and polystyrene standards. Hydroxyl numbers were measured according to ASTM method D4274, the water content according to ASTM method D 4672 and acid values by using ASTM method D 1980.

### Example 1

For the following example, a crude propylene oxide was used. The crude propylene oxide comprised 99.6% by weight of propylene oxide. The remainder consisted of impurities with boiling points below 100 °C, such as propionaldehyde, water, acetaldehyde, acetone, lower alcohols and acids. The crude propylene oxide further comprised polypropylene oxide in an amount of below 2 ppm.

A 10 1 reactor equipped with a stirrer and a heating/cooling system was charged with 2160 grams glycerol and 320 grams KOH dissolved in water. Subsequently, the reactor was heated to about 120 °C under stirring. Once the desired temperature was reached, the mixture was stripped with nitrogen at reduced pressure for 2 hours to remove water and air. Subsequently, the temperature was reduced to 115 °C.

The addition of the propylene oxide was started at a pressure of 1.0*10⁵ N/m². During 160 minutes, 5840 grams of the crude propylene oxide were continuously added to the reactor. After the addition, the reactor temperature was increased in 20 minutes to 125 °C, and maintained at 125 °C for a further 10 minutes to ensure that all propylene oxide had reacted. The reaction mixture was then subjected to reduced pressure followed by a nitrogen purge during a period of 15 minutes. Subsequently, the reactor content was cooled to 90 °C and the product was discharged. The resulting intermediate product had a viscosity of 147 mm²/s (cSt), and an average molecular weight of 348.

### Comparative Example 1

The same procedure was performed according to the procedure of Example 1, however using purified propylene oxide with a purity of more than 99.98% instead of the crude propylene oxide. The resulting intermediate product had a viscosity of 147 mm²/s (cSt), and an average molecular weight of 346.

### Example 2

A polyether polyol was prepared according the following procedure. A 10 1 reactor equipped with stirrer and a heating/cooling system was charged with 582 g of the intermediate product of Example 1 at ambient temperature. Subsequently, the reactor was sealed and heated to 120 °C, and vacuum was applied to remove traces of air from the reactor. Starting at a pressure of 1.0*105 N/m², 4630 g of propylene oxide comprising 9% by weight of ethylene oxide were added continuously during 190 minutes. Then the temperature of the reactor content was increased linearly to 135 °C over a period of 105 minutes. The reaction mixture was maintained at 135 °C for 15 minutes, then the reactor content was subjected to reduced pressure followed by a nitrogen purge for 12 minutes. Subsequently, the reactor was cooled to 90 °C and the product transferred to a neutralisation unit. The product was then neutralised by addition of a watery phosphoric acid solution and filtered.

The polyether polyol obtained had a hydroxyl value of 55 mg/g KOH, a viscosity of 216 mm²/s (cSt), and acid value of 0.020 mg KOH/g, a water content of 0.02% by weight, and a molecular weight of 3050.

### Comparative Example 2

A polyether polyol was prepared according to the procedure of Example 2, whereby the intermediate product obtained in Comparative Example 1 was used. The polyether polyol obtained had a hydroxyl value of 56 mg/g KOH, a viscosity of 219 mm²/s (cSt), an acid value of 0.037 mg KOH/g, a water content of 0.020% by weight, and a molecular weight of 3015.

Both polyether polyols were formulated into polyurethane compositions, and polyurethane foams were produced on a laboratory scale from these polyurethane foams. Both foams had very similar properties and showed the same good performance level.

## Claims

1. Process for the preparation of polyether polyols having an average molecular weight of at least 2000, comprising
(i) reacting an initiator with a crude alkylene oxide, which crude alkylene oxide comprises on total composition from 95.00% by weight to 99.85% by weight of an alkylene oxide, and of from 5.0% by weight to 0.15% by weight of compounds other than alkylene oxide, wherein said compounds other than alkylene oxide may be hydrocarbons such as alkenes and alkanes, and oxygen containing by-products such as aldehydes, ketones, alcohols, ethers, acids and esters, such as water, acetone, acetic aldehyde, propionic aldehyde, methyl formate, and the corresponding carbon acids, in the presence of a catalyst to obtain an intermediate product having a weight average molecular weight of from 200 to 1100;
(ii) reacting the intermediate product further with one or more pure alkylene oxides, which pure alkylene oxide comprises on total composition at least 99.85% by weight of alkylene oxide, to yield the polyether polyols.

2. Process according to claim 1, wherein the crude alkylene oxide comprises one or more alkylene oxides selected from the group consisting of ethylene oxide, propylene oxide and butylene oxide.

3. Process according to claim 1 or 2, wherein the crude alkylene oxide is obtained by
(a) reacting alkenes with peroxide-containing compounds to yield alkylene oxides, and
(b) removing unreacted alkene from the reaction mixture, and
(c) removing crude alkylene oxide from the reaction mixture by at least one distillation treatment, and optionally
(d) removing contaminants from the crude alkylene oxide by at least one distillation treatment.

4. Process according to any one of claims 1 to 3, wherein the pure alkylene oxide is obtained by
(a) reacting alkenes with peroxide-containing compounds to yield alkylene oxides, and
(b) removing unreacted alkene from the reaction mixture, and
(c) removing crude alkylene oxide from the reaction mixture by at least one distillation treatment, and optionally
(d) removing contaminants from the crude alkylene oxide by at least one distillation treatment, and
(e) fractioned distillation, extractive distillation, adsorption and/or filtration.

5. Process according to any one of claims 1 to 4, wherein the intermediate product obtained in step (i) is neutralised and/or filtered prior to use in step (ii).

6. Process according to any one of the preceding claims, wherein the polyether polyols obtained by step (ii) have an average functionality of from 2 to 6 and an average molecular weight of from 2100 to 8500.

7. Intermediate product obtainable by step (i) of the process according to any one of claims 1 to 3.

## Patentansprüche

1. Verfahren zur Herstellung von Polyetherpolyolen mit einem mittleren Molekulargewicht von wenigstens 2.000, umfassend
(i) das Umsetzen eines Initiators mit einem rohen Alkylenoxid, welches rohe Alkylenoxid bezogen auf die Gesamtzusammensetzung 95,00 Gew.-% bis 99,85 Gew.-% an Alkylenoxid und 5,0 Gew.-% bis 0,15 Gew.-% an anderen Verbindungen als Alkylenoxid umfaßt, wobei die anderen Verbindungen als Alkylenoxid Kohlenwasserstoffe, wie Alkene und Alkane, und Sauerstoff-enthaltende Nebenprodukte, wie Aldehyde, Ketone, Alkohole, Ether, Säuren und Ester, wie Wasser, Aceton, Essigsäurealdehyd, Propionsäurealdehyd, Methylformiat, und die entsprechenden Carbonsäuren sein können, in Gegenwart eines Katalysator, um ein Zwischenprodukt mit einem gewichtsmittleren Molekulargewicht von 200 bis 1.100 zu erhalten;
(ii) weiteres Umsetzen des Zwischenprodukts mit einem oder mehreren reinen Alkylenoxiden, welches reine Alkylenoxid bezogen auf die Gesamtzusammensetzung wenigstens 99,85 Gew.-% an Alkylenoxid umfaßt, um die Polyetherpolyole zu erhalten.

2. Verfahren nach Anspruch 1, worin das rohe Alkylenoxid eines oder mehrere Alkylenoxide umfaßt, welche von der aus Ethylenoxid, Propylenoxid und Butylenoxid bestehenden Gruppe ausgewählt sind.

3. Verfahren nach Anspruch 1 oder 2, worin das rohe Alkylenoxid durch
(a) Umsetzen von Alkenen mit Peroxid-enthaltenden Verbindungen, um Alkylenoxide zu erhalten, und
(b) Entfernen von nicht umgesetztem Alken aus dem Reaktionsgemisch, und
(c) Entfernen von rohem Alkylenoxid aus dem Reaktionsgemisch durch wenigstens eine Destillationsbehandlung, und wahlweise
(d) Entfernung von Verunreinigungen aus dem rohen Alkylenoxid durch wenigstens eine Destillationsbehandlung erhalten wird.

4. Verfahren nach einem der Ansprüche 1 bis 3, worin das reine Alkylenoxid durch
(a) Umsetzen von Alkenen mit Peroxid-enthaltenden Verbindungen, um Alkylenoxide zu erhalten, und
(b) Entfernen von nicht umgesetztem Alken aus dem Reaktionsgemisch, und
(c) Entfernen von rohem Alkylenoxid aus dem Reaktionsgemisch durch wenigstens eine Destillationsbehandlung, und wahlweise
(d) Entfernen von Verunreinigungen aus dem rohen Alkylenoxid durch wenigstens eine Destillationsbehandlung, und
(e) fraktionierte Destillation, extraktive Destillation, Adsorption und/oder Filtration erhalten wird.

5. Verfahren nach einem der Ansprüche 1 bis 4, worin das im Schritt (i) erhaltene Zwischenprodukt vor der Verwendung im Schritt (ii) neutralisiert und/oder filtriert wird.

6. Verfahren nach einem der vorstehenden Ansprüche, worin die im Schritt (ii) erhaltenen Polyetherpolyole eine durchschnittliche Funktionalität von 2 bis 6 und ein durchschnittliches Molekulargewicht von 2.100 bis 8.500 aufweisen.

7. Zwischenprodukt, welches durch den Schritt (i) des Verfahrens nach einem der Ansprüche 1 bis 3 erhältlich ist.

## Revendications

1. Procédé de préparation de polyéther polyols ayant un poids moléculaire moyen d'au moins 2000, comprenant :
(i) la réaction d'un initiateur avec un oxyde d'alkylène brut, lequel oxyde d'alkylène brut comprend par rapport à la composition totale de 95,00 % en poids à 99,85 % en poids d'un oxyde d'alkylène, et de 5,0 % en poids à 0,15 % en poids de composés autres que de l'oxyde d'alkylène, dans lequel lesdits composés autres que de l'oxyde d'alkylène peuvent être des hydrocarbures tels que alcènes et alcanes, et des sous-produits contenant de l'oxygène tels que aldéhydes, cétones, alcools, éthers, acides et esters, comme l'eau, l'acétone, l'aldéhyde acétique, l'aldéhyde propionique, le formiate de méthyle, et les acides carbonés correspondants, en présence d'un catalyseur pour obtenir un produit intermédiaire ayant un poids moléculaire moyen pondéral de 200 à 1100;
(ii) la réaction du produit intermédiaire avec de plus un ou plusieurs oxydes d'alkylène purs, lequel oxyde d'alkylène pur comprend par rapport à la composition totale au moins 99,85 % en poids d'oxyde d'alkylène, pour donner les polyéther polyols.

2. Procédé suivant la revendication 1, dans lequel l'oxyde d'alkylène brut comprend un ou plusieurs oxydes d'alkylène choisis dans le groupe comprenant l'oxyde d'éthylène, l'oxyde de propylène et l'oxyde de butylène.

3. Procédé suivant l'une ou l'autre des revendications 1 et 2, dans lequel l'oxyde d'alkylène brut est obtenu par :
(a) la réaction d'alcènes avec des composés contenant du peroxyde pour donner des oxydes d'alkylène, et
(b) la séparation de l'alcène n'ayant pas réagi du mélange de réaction, et
(c) la séparation de l'oxyde d'alkylène brut du mélange de réaction par au moins un traitement de distillation, et éventuellement
(d) la séparation des contaminants de l'oxyde d'alkylène brut par au moins un traitement de distillation.

4. Procédé suivant l'une quelconque des revendications 1 à 3, dans lequel l'oxyde d'alkylène pur est obtenu par :
(a) la réaction d'alcènes avec des composés contenant du peroxyde pour donner des oxydes d'alkylène, et
(b) la séparation de l'alcène n'ayant pas réagi du mélange de réaction, et
(c) la séparation de l'oxyde d'alkylène brut du mélange de réaction par au moins un traitement de distillation, et éventuellement
(d) la séparation des contaminants de l'oxyde d'alkylène brut par au moins un traitement de distillation, et
(e) une distillation fractionnée, une distillation extractive, une adsorption et/ou une filtration.

5. Procédé suivant l'une quelconque des revendications 1 à 4, dans lequel le produit intermédiaire obtenu dans l'étape (i) est neutralisé et/ou filtré avant utilisation dans l'étape (ii).

6. Procédé suivant l'une quelconque des revendications précédentes, dans lequel les polyéther polyols obtenus par l'étape (ii) ont une fonctionnalité moyenne de 2 à 6 et un poids moléculaire moyen de 2100 à 8500.

7. Produit intermédiaire obtenable par l'étape (i) du procédé suivant l'une quelconque des revendications 1 à 3.
